# EUROPÄISCHE PATENTANMELDUNG

(11) **EP 0 922 916 A2**
(43) Veröffentlichungstag der Anmeldung: **16.06.1999**
(21) Anmeldenummer: 98122650.9
(22) Anmeldetag: 28.11.1998
(51) Int. Cl.: F25B 25/00, C09K 5/00, F25B 47/00

(54) **Verfahren und Vorrichtung zum Kühlen eines Wärmeträgers**

(30) Priorität: 12.12.1997 DE 19755286
(71) Anmelder: MESSER GRIESHEIM GMBH, 60547 Frankfurt (DE)
(72) Erfinder: Grabhorn, Hermann Dr., 40474 Düsseldorf (DE); Schmidt, Heinz-Josef, 41542 Dormagen (DE); Kutz, Thomas, 41379 Brüggen-Born (DE)

(57) **Zusammenfassung**

Bei einem Verfahren zum Kühlen eines Wärmeträgers, bei dem ein erhitzter Wärmeträger abgekühlt wird in einem ersten Wärmetauscher (1,14), der mit einem ersten, im wesentlichen flüssigen Kälteträger (18) betrieben wird, wobei der erste, im wesentlichen flüssige Kälteträger (18) zumindest zum großen Teil verdampft und wodurch die Wärme des Wärmeträgers zumindest teilweise auf den ersten Kälteträger (18) übertragen wird, bei dem der erste, im wesentlichen dampfförmige Kälteträger (18) anschließend einem zweiten Wärmetauscher (2,19) zugeführt wird, der mit einem zweiten, im wesentlichen flüssigen tiefkalten Kälteträger betrieben wird, wobei der erste, im wesentlichen dampfförmige Kälteträger (18) wieder verflüssigt wird und wobei der zweite im wesentlichen flüssige tiefkalte Kälteträger zumindest zum großen Teil verdampft und wodurch die Wärme des ersten Kälteträgers (18) zumindest teilweise auf den zweiten Kälteträger übertragen wird, ist die Siedetemperatur des ersten Kälteträgers (18) höher als die Temperatur für den Schmelz- oder Stockpunkt des Wärmeträgers.

## Beschreibung

Die Erfindung betrifft ein Verfahren sowie eine Vorrichtung zur Kühlung eines Wärmeträgers. Wärmeträger werden verwendet, um beispielsweise die Wärme von chemischen Reaktoren wegzuführen. Der erhitzte Wärmeträger wird anschließend in einem Wärmetauscher wieder abgekühlt, bevor er dem chemischen Reaktor wieder zugeführt wird. Dabei ist es ein Problem, daß unter bestimmten verfahrenstechnischen Bedingungen und Betriebsstörungen ein Einfrieren des meist flüssigen Wärmeträgers während oder nach dessen erfolgter Abkühlung in dem Wärmetauscher nicht mit Sicherheit vermieden werden kann. Um die Gefahr des Einfrierens zu verringern, wurden spezielle Wärmeüberträger, zum Beispiel Methylcyclopentan, eingesetzt. Der erhitzte Wärmeträger wurde beispielsweise nach der DE 42 40 306 C2 mit tiefkaltem flüssigen Stickstoff als Kälteträger in dem Wärmetauscher abgekühlt. Dennoch besteht die Gefahr, daß in Grenzbereichen beim Betreiben eines Reaktors oder bei Störungen bzw. beim Ausfall bestimmter Komponenten der Anlage das Methylcyclopentan einfriert und den Wärmetauscher verstopft. In diesem Fall ist die gewünschte oder erforderliche Kühlung des Reaktors nicht mehr gewährleistet.

Aufgabe der Erfindung ist es, ein Einfrieren des Wärmeträgers bzw. des Wärmetauschers relativ sicher zu vermeiden.

Die Aufgabe wird erfindungsgemäß durch ein Verfahren zum Kühlen eines Wärmeträgers gelöst, bei dem ein erhitzter Wärmeträger abgekühlt wird in einem ersten wärmetauscher, der mit einem ersten, im wesentlichen flüssigen Kälteträger betrieben wird, wobei der erste, im wesentlichen flüssige Kälteträger zumindest zum großen Teil verdampft und wodurch die Wärme des Wärmeträgers zumindest teilweise auf den ersten Kälteträger übertragen wird, bei dem der erste, im wesentlichen dampfförmige Kälteträger anschließend einem zweiten Wärmetauscher zugeführt wird, der mit einem zweiten, im wesentlichen flüssigen tiefkalten Kälteträger betrieben wird, wobei der erste, im wesentlichen dampfförmige Kälteträger wieder verflüssigt wird und wobei der zweite im wesentlichen flüssige tiefkalte Kälteträger zumindest zum großen Teil verdampft und wodurch die Wärme des ersten Kälteträgers zumindest teilweise auf den zweiten Kälteträger übertragen wird, und bei dem die Siedetemperatur des ersten Kälteträgers höher ist als die Temperatur für den Schmelz- oder Stockpunkt des Wärmeträgers.

Nach der Erfindung liegt die Temperatur für den Schmelz- oder Stockpunkt des Wärmeträgers in einem Bereich von 123 bis 193 K und/oder die Siedetemperatur des ersten Kälteträgers bei Betriebsdruck in einem Bereich von 123 bis 193 K und/oder die Siedetemperatur des zweiten Kälteträgers bei Betriebsdruck in einem Bereich von 70 bis 110 K, vorzugsweise 90 bis 110 K.

Erfindungsgemäß ist der Wärmeträger vorzugsweise Toluol und/oder der erste Kälteträger vorzugsweise Methan. Die Verwendung von Toluol und Methan ist vorteilhaft, da diese Stoffe günstige Stoffeigenschaften aufweisen, relativ gut verfügbar und damit relativ preisgünstig sind.

Es ist nach der Erfindung vorgesehen, daß der zweite Kälteträger ein tiefkaltes flüssiges Gas, vorzugsweise flüssiger Stickstoff, ist. Die Verwendung von Stickstoff hat den Vorteil, daß Stickstoff günstige Stoffeigenschaften aufweist sowie relativ gut verfügbar und damit relativ preisgünstig ist.

Nach der Erfindung weist der flüssige tiefkalte zweite Kälteträger vor dessen Zuführung in den zweiten Wärmetauscher einen Druck von 0 bis 16 bar Überdruck und eine Temperatur von 77 bis 113 K auf. Der flüssige tiefkalte zweite Kälteträger wird hierzu angedrosselt, denn dessen Siedepunkt bei Atmosphärendruck liegt oft niedriger als der Schmelzpunkt des ersten Kälteträgers.

Erfindungsgemäß wird die Zufuhr des zweiten Kälteträgers zum zweiten Wärmetauscher über den Druck des ersten Kälteträgers geregelt. Bei konstantem Druck ist gemäß der Dampfdruckkurve des ersten Kälteträgers auch die Siedetemperatur des Kälteträgers im ersten Wärmetauscher konstant. Durch ein Varriieren des Drucks kann vorteilhaft die Siedetemperatur an den Schmelzpunkt des Wärmeträgers angepaßt werden, so daß ein Einfrieren des Wärmeträgers nahezu völlig ausgeschlossen ist.

Vorzugsweise wird der erste Kälteträger in einem geschlossenen Kreislauf geführt. Dadurch wird vorteilhaft der Verbrauch an erstem Kälteträger minimiert.

Erfindungsgemäß findet der geschlossene Kreislauf des ersten Kälteträgers mit dessen Verdampfung und die Verflüssigung des ersten Kälteträgers in einem gemeinsamen Gehäuse eines Apparates statt. Dies hat den Vorteil, daß der Apparat relativ preiswert ist und daß der dampfförmige erste Kälteträger entgegenströmenden flüssigen ersten Kälteträger am Abfließen in den ersten Wärmetauscher nicht behindert.

Die Aufgabe wird durch eine Vorrichtung zum Kühlen eines Wärmeträgers gelöst, der mindestens ein erster und mindestens ein zweiter Wärmetauscher zugeordnet ist, welche innerhalb eines gemeinsamen Gehäuses eines Apparates angeordnet sind, wobei der erste Wärmetauscher eine Eintrittsleitung für einen ersten, erhitzten Wärmeträger und eine Austrittsleitung für den abgekühlten Wärmeträger aufweist, wobei im Sumpf des gemeinsamen Gehäuses des Apparates ein erster Kälteträger ist, wobei der erste Wärmetauscher in dem gemeinsamen Gehäuse so angeordnet ist, daß der erste Kälteträger im Sumpf des gemeinsamen Gehäuses verdampft und im Mantelraum des gemeinsamen Gehäuses aufsteigt, wobei der zweite Wärmetauscher eine Eintrittsleitung für einen zweiten tiefkalten Kälteträger und eine Austrittsleitung für den erhitzten zweiten Kälteträger aufweist, und wobei der zweite Wärmetauscher in dem gemeinsamen Gehäuse so angeordnet ist, um den ersten, bereits verdampften Kälteträger wieder zu kondensieren.

Nach der Erfindung ist der erste und/oder zweite Wärmetauscher, vorzugsweise der erste und zweite Wärmetauscher, ein U-Rohr Rohrbündel. Die Verwendung eines U-Rohr Rohrbündels hat den Vorteil, daß keine Thermospannungen auftreten.

Erfindungsgemäß ist der Vorrichtung mindestens eine Druckmeß-und Regelvorrichtung für den Druck innerhalb des gemeinsamen Gehäuses des Apparates und eine Druckmeß-und Regelvorrichtung für den Druck des zweiten Kühlmittels innerhalb des zweiten Wärmetauschers zugeordnet.

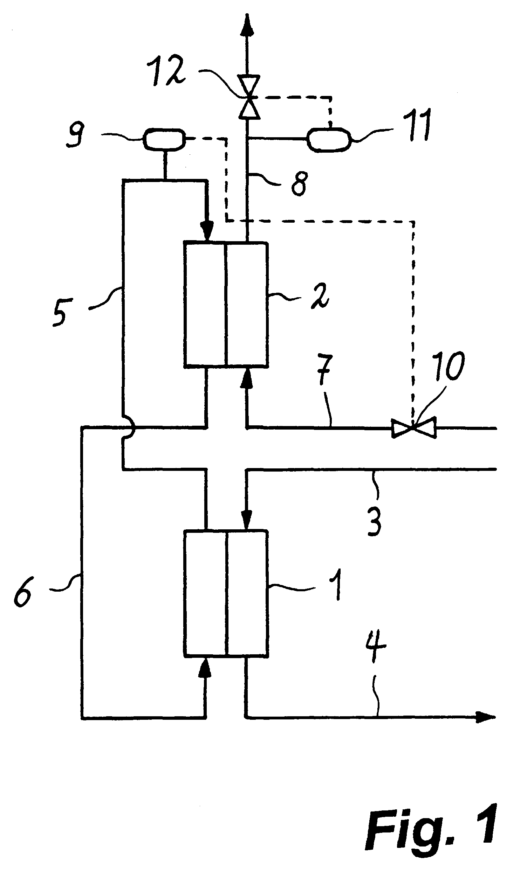

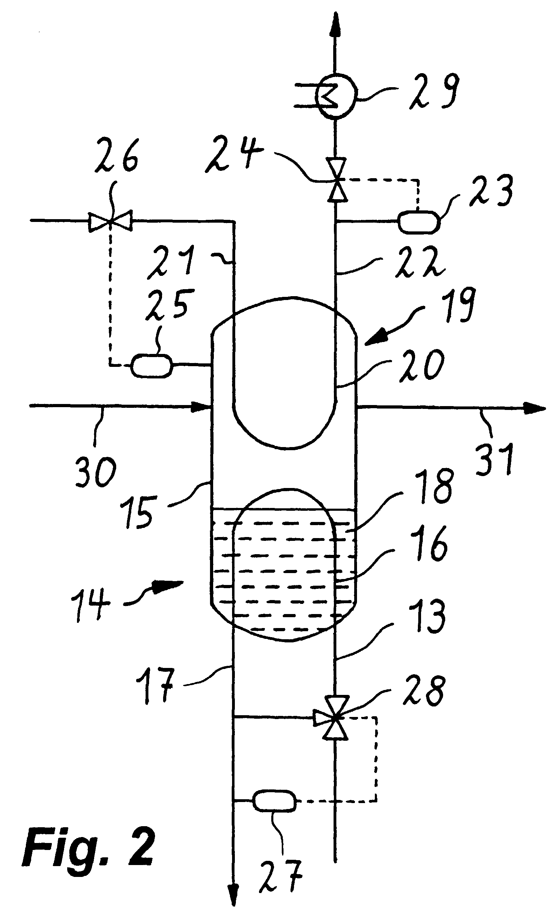

Die erfindungsgemäße Vorrichtung sowie das Verfahren werden nun anhand von Abbildungen (Fig.1 und Fig. 2) und Ausführungsbeispielen näher erläutert.
Die Fig. 1 zeigt eine Vorrichtung zur Durchführung des Verfahrens mit einem ersten und zweiten Wärmetauscher.
In Fig. 2 ist eine bestimmte Variante der Vorrichtung zur Durchführung des Verfahrens dargestellt, bei der der erste und zweite Wärmetauscher innerhalb eines gemeinsamen Gehäuses angeordnet sind.

Bei einem Verfahren zur Kühlung verschiedener Rührkessel und Kondensatoren wird das in Fig. 1 dargestellte Kühlsystem eingesetzt, welches mit Toluol als Wärmeträger betrieben wird. Es wird zum Beispiel bei einem Temperaturniveau von ca. 193 K (ca. -80°C) eine Kühlleistung von bis zu 300 kW benötigt. Dazu soll ein Volumenstrom von bis zu 80 m³/h des Wärmeträgers durch Verdampfung von flüssigem tiefkaltem Stickstoff (zweiter Kälteträger) gekühlt werden. Um eine Bildung von Toluoleis und damit ein Einfrieren des ersten Wärmetauschers 1 zu verhindern, sollte auf der Kühlseite des ersten Wärmetauschers 1 die Schmelztemperatur des Toluols von ca. 178 K (ca. -95°C) nicht unterschritten werden. Dazu wird gemäß der Erfindung zwischen dem Verdampfer für flüssigen Stickstoff und dem Kühler für Toluol ein zweiter Wärmetauscher 2 mit Kondensator und Verdampfer geschaltet und Methan (erster Kälteträger) bei einem Druck von 33 bar als Zwischenmedium eingesetzt. Dazu wird das Toluol über Leitung 3 dem ersten Wärmetauscher 1 zugeführt und auf die gewünschte Temperatur gekühlt. Das Toluol verläßt den ersten Wärmetauscher 1 wieder über Leitung 4 und wird den Rührkesseln und Kondensatoren zur Kühlung wieder zugeführt. Das flüssige Methan verdampft und strömt über Leitung 5 zum zweiten Wärmetauscher 2, wo es wieder verflüssigt wird und anschließend über Leitung 6 dem ersten Wärmetauscher zugeführt wird. Die bei der Verflüssigung notwendige Kälteleistung kommt von dem flüssigen Stickstoff, der dem zweiten Wärmetauscher 2 über Leitung 7 zugeführt wird. Der flüssige Stickstoff verdampft und verläßt den Wärmetauscher 2 über Leitung 8. Der flüssige Stickstoff wird mit einem Stickstoffversorgungssystem, daß bedeutet über einen Vorratsbehälter zur Verfügung gestellt. In der Leitung 5 ist eine Druckmeß- und Regeleinrichtung 9 angeordnet, um die Zufuhr des flüssigen Stickstoffs über eine Absperrvorrichtung 10 zu regeln. Ferner wird der Druck des Stickstoffs im zweiten Wärmetauscher 2 über eine Druckmeß- und Regeleinrichtung 11 und zugeordneter Absperrvorrichtung 12 eingestellt auf einen Wert von 3 bis 16 bar Überdruck.

Bei größeren Verunreinigungen des Toluols mit hochschmelzenden Substanzen zum Beispiel Wasser, ist ein Einfrieren des Toluols möglich. Für derartige Störfälle kann eine vom Toluolkreislauf unabhängige Notkühlung vorgesehen werden. Als Notkühlung kann beispielsweise eine Kühlung mit flüssigem Stickstoff unmittelbar in den Mantelraum der sicherheitsrelevanten Verbraucher eingesetzt werden (hier nicht dargestellt).

Die in Fig. 2 dargestellte Vorrichtung wird beispielsweise zum Kühlen eines Reaktors eingesetzt. Hier strömt Toluol über eine Leitung 13 von den Kälteverbrauchern im Rücklauf zu einem Wärmetauscher 14 im Apparat 15. Das Toluol fließt durch den Wärmetauscher 14 in einem U-Rohrbündel 16, wird dabei abgekühlt und über Leitung 17 aus dem Wärmetauscher 14 weggeführt. Auf der Mantelseite im Sumpf des Apparates 15 ist siedendes, flüssiges Methan 18 bei einem Druck von ca. 33 bar. Die Siedetemperatur bei diesem Druck beträgt ca. 180 K (ca. -93°C) und liegt damit sicher oberhalb des Schmelzpunkts von Toluol. Selbst bei einem Stillstand der Kreislaufpumpen (in Fig. 2 nicht dargestellt) ist daher eine Bildung von Toluoleis ausgeschlossen. Das beim Wärmeübergang verdampfende Methan steigt im Mantelraum des Apparates 15 auf. Im Kopfraum ist ein zweiter Wärmetauscher 19 mit einem U-Rohrbündel 20 installiert. Das zweite U-Rohrbündel 20 wird mit flüssigem Stickstoff über Leitung 21 gekühlt. Das im Mantelraum kondensierende Methan fließt in den Sumpf innerhalb des Apparates 15 zurück. Der flüssige Stickstoff verdampft, überhitzt und verläßt gasförmig den Wärmetauscher 19 über Leitung 22. Der Druck des Stickstoffs im Kühler wird über eine Druckmeß- und Regeleinrichtung 23 und Absperrvorrichtung 24 in Leitung 22 auf ca. 3 bar gehalten. Bei diesem Druck beträgt die Siedetemperatur ca. 92 K (ca. -181°C). Dadurch wird ein Ausfrieren von Methan (Schmelztemperatur ca. 89 K (ca. -184 °C)) auf der Rohroberfläche des zweiten U-Rohrbündels 20 verhindert. Die Zufuhr des Stickstoffs wird über den Druck im Mantelraum des Apparates 15 mit Hilfe einer Druckmeß- und Regeleinrichtung 25 und zugeordneter Absperrvorrichtung 26 geregelt. Über den Siededruck des Methans wird so die Temperatur auf der Kühlseite für das Toluol konstant gehalten. Die Vorlauftemperatur des Toluols zu den Kälteverbrauchern wird konstant gehalten. Über eine Temperaturmeß- und Regeleinrichtung 27 und eine Absperrvorrichtung 28, vorzugsweise ein Dreiweg- oder Zweiwegventil, wird das warme Toluol des Rücklaufs mit dem kalten Toluol aus dem ersten Wärmetauscher 1 auf ca. 193 K (ca. -80 °C) gemischt. Die Vorrichtung wird aus einem vakuumisolierten Vorratsbehälter mit tiefkaltem flüssigen Stickstoff versorgt (hier nicht dargestellt). Der die Anlage verlassende gasförmige Stickstoff hat eine Temperatur von ca. 173 K (ca. -100 °C). Er wird in einem Erhitzer 29 auf Umgebungstemperatur angewärmt und ins Freie abgelassen. Der Wärmetauscher 14 wird über Leitung 30 mit Methan befüllt und über Leitung 31 im Bedarfsfall entleert.

## Patentansprüche

1. Verfahren zum Kühlen eines Wärmeträgers,
bei dem ein erhitzter Wärmeträger abgekühlt wird in einem ersten Wärmetauscher, der mit einem ersten, im wesentlichen flüssigen Kälteträger betrieben wird, wobei der erste, im wesentlichen flüssige Kälteträger zumindest zum großen Teil verdampft und wodurch die Wärme des Wärmeträgers zumindest teilweise auf den ersten Kälteträger übertragen wird, bei dem der erste, im wesentlichen dampfförmige Kälteträger anschließend einem zweiten Wärmetauscher zugeführt wird, der mit einem zweiten, im wesentlichen flüssigen tiefkalten Kälteträger betrieben wird, wobei der erste, im wesentlichen dampfförmige Kälteträger wieder verflüssigt wird und wobei der zweite im wesentlichen flüssige tiefkalte Kälteträger zumindest zum großen Teil verdampft und wodurch die Wärme des ersten Kälteträgers zumindest teilweise auf den zweiten Kälteträger übertragen wird, und bei dem die Siedetemperatur des ersten Kälteträgers höher ist als die Temperatur für den Schmelz- oder Stockpunkt des Wärmeträgers und Siedetemperatur des zweiten Kälteträgers höher ist als die Temperatur für den Schmelz- oder Stockpunkt des des ersten Kälteträgers.

2. Verfahren nach Anspruch 1,
bei dem die Temperatur für den Schmelz- oder Stockpunkt des Wärmeträgers in einem Bereich von 123 bis 193 K liegt.

3. Verfahren nach Anspruch 1 oder 2,
bei dem die Siedetemperatur des ersten Kälteträgers bei Betriebsdruck in einem Bereich von 123 bis 193 K liegt.

4. Verfahren nach einem der Ansprüche 1 bis 3,
bei dem die Siedetemperatur des zweiten Kälteträgers bei Betriebsdruck in einem Bereich von 70 bis 110 K liegt.

5. Verfahren nach einem der Ansprüche 2 bis 4,
bei dem der Wärmeträger Toluol ist.

6. Verfahren nach einem der Ansprüche 3 bis 5,
bei dem der erste Kälteträger Methan ist.

7. Verfahren nach einem der Ansprüche 4 bis 6,
bei dem der zweite Kälteträger ein tiefkaltes flüssiges Gas ist.

8. Verfahren nach Anspruch 7,
bei dem das tiefkalte flüssige Gas flüssiger Stickstoff ist.

9. Verfahren nach einem der Ansprüche 1 bis 8,
bei dem der flüssige tiefkalte zweite Kälteträger vor dessen Zuführung in den zweiten Wärmetauscher einen Druck von 0 bis 16 bar Überdruck und eine Temperatur von 73 bis 113 K aufweist.

10. Verfahren nach einem der Ansprüche 1 bis 9,
bei dem die Zufuhr des zweiten Kälteträgers zum zweiten Wärmetauscher geregelt wird über den Druck des ersten Kälteträgers.

11. Verfahren nach einem der Ansprüche 1 bis 10,
bei dem der erste Kälteträger in einem geschlossenen Kreislauf geführt wird.

12. Verfahren nach Anspruch 11,
bei dem der geschlossene Kreislauf des ersten Kälteträgers mit dessen Verdampfung und die Verflüssigung des zweiten Kälteträgers in einem gemeinsamen Gehäuse eines Apparates stattfindet.

13. Vorrichtung zum Kühlen eines Wärmeträgers,
der mindestens ein erster und mindestens ein zweiter Wärmetauscher zugeordnet ist, welche innerhalb eines gemeinsamen Gehäuses eines Apparates angeordnet sind, wobei der erste Wärmetauscher eine Eintrittsleitung für einen ersten, erhitzten Wärmeträger und eine Austrittsleitung für den abgekühlten Wärmeträger aufweist, wobei im Sumpf des gemeinsamen Gehäuses des Apparates ein erster Kälteträger ist, wobei der erste Wärmetauscher in dem gemeinsamen Gehäuse so angeordnet ist, daß der erste Kälteträger im Sumpf des gemeinsamen Gehäuses verdampft und im Mantelraum des gemeinsamen Gehäuses aufsteigt, wobei der zweite Wärmetauscher eine Eintrittsleitung für einen zweiten tiefkalten Kälteträger und eine Austrittsleitung für den erhitzten zweiten Kälteträger aufweist, und wobei der zweite Wärmetauscher in dem gemeinsamen Gehäuse so angeordnet ist, um den ersten, bereits verdampften Kälteträger wieder zu kondensieren.

14. Vorrichtung nach Anspruch 13,
dadurch gekennzeichnet,
daß der erste und/oder zweite Wärmetauscher ein U-Rohr Rohrbündel ist.

15. Vorrichtung nach Anspruch 13 oder 14,
dadurch gekennzeichnet,
daß der Vorrichtung mindestens eine Druckmeß-und Regelvorrichtung für den Druck innerhalb des gemeinsamen Gehäuses des Apparates und eine Druckmeß-und Regelvorrichtung für den Druck des zweiten Kühlmittels innerhalb des zweiten Wärmetauschers zugeordnet ist.
